# EUROPÄISCHE PATENTSCHRIFT

(11) **EP 4 122 737 B1**
(45) Veröffentlichungstag und Bekanntmachung des Hinweises auf die Patenterteilung: **22.10.2025**
(21) Anmeldenummer: 22184445.9
(22) Anmeldetag: 12.07.2022
(51) Int. Cl.: B60K 7/00, B60K 1/00, B60K 17/04, B60K 17/22, B60K 17/24, B60K 17/26

(54) **FAHRZEUGACHSE**
VEHICLE AXLE
ESSIEU DE VÉHICULE

(30) Priorität: 20.07.2021 DE 102021118698
(43) Veröffentlichungstag der Anmeldung: 25.01.2023
(73) Patentinhaber: BPW Bergische Achsen Kommanditgesellschaft, 51674 Wiehl (DE)
(72) Erfinder: Schlimbach, Andreas, 53804 Much (DE); Klass, Karsten, 51674 Wiehl (DE); Gemassmer, Christoph, 53227 Bonn (DE)
(74) Vertreter: DREISS Patentanwälte PartG mbB

(56) Entgegenhaltungen:
- EP-A1- 3 643 549
- EP-A2- 0 509 221
- WO-A2-2010/051427
- DE-A1- 102015 203 194
- DE-A1- 102019 109 159
- DE-A1- 102019 114 828
- DE-A1- 102019 118 958
- DE-T5- 112013 002 081

## Beschreibung

Die Erfindung betrifft eine Fahrzeugachse, mit an beiden Achsenden auf Achsstummeln drehbar gelagerten Radköpfen, einer in einem Mittelabschnitt der Fahrzeugachse angeordneten elektrischen Vorrichtung, die eine im Motor- und/oder Generatorbetrieb betreibbare elektrische Maschine aufweist, und einer durch den Achsstummel hindurchführenden Drehverbindung, die den Radkopf mit dem Kraftaus- bzw. Eingang der elektrischen Vorrichtung verbindet.

Eine Fahrzeugachse in der Bauart als elektrisch angetriebene Fahrzeugachse mit diesen Merkmalen ist aus der DE 10 2019 114 828 A bekannt. Der elektrische Antrieb einschließlich eines daran angeflanschten Getriebes befindet sich innerhalb eines dreidimensional offen gestalteten Rahmens, der den Mittelabschnitt der Fahrzeugachse bildet. Von dem Rahmen führen auf beiden Fahrzeugseiten Antriebswellen zu dem jeweiligen Radkopf. Die Antriebswellen führen zentral durch Achsrohre hindurch, über welche der Rahmen, unter Bildung einer Starrachskonstruktion, mit dem jeweiligen Achsstummel der Fahrzeugachse starr verbunden ist.

Eine im Prinzip ähnlich gestaltete und ebenfalls elektrisch angetriebene Starrachse ist ferner aus der WO 2019/023531 A bekannt.

Aus der US 2021/0104883 A1 ist eine Achskonstruktion für einen PKW in nicht-starrer Bauart bekannt, wobei auch hier die elektrischen Antriebe einschließlich der zugeordneten Getriebe zentral und innerhalb eines dreidimensional offen gestalteten Rahmens angeordnet sind, der den Mittelabschnitt der Achskonstruktion bildet. Aus dem Rahmen heraus führen kardanisch gelagerte Antriebswellen zu dem jeweiligen Fahrzeugrad. Aus der WO 2010/051427 A2 ist Fahrzeugachse mit den Merkmalen des Oberbegriffs des Anspruchs 1 bekannt.

Der Vorteil der aus dem Stand der Technik bekannten Starrachsen besteht darin, dass die als Antriebswellen dienenden Drehwellen, da sie sich jeweils geschützt in den starren Achsrohren erstrecken und sie nur eine einfache radiale Drehlagerung an ihren Enden benötigen, ausschließlich die erforderlichen Drehmomente übertragen müssen, und sie selbst im Fall stärkerer Fahrzeugbewegungen frei von Querkräften oder Biegebelastungen arbeiten. Allerdings kann es auch in Bezug auf die an den Drehwellen wirkenden Drehmomente in bestimmten Situationen des Fahrbetriebs zu Grenzüberschreitungen mit der Folge einer mechanischen oder sonstigen Überforderung der beteiligten Antriebskomponenten kommen. Dies gilt insbesondere im Fall von abrupt sich ändernden Fahrzuständen.

Ziel der Erfindung ist eine verbesserte Fahrzeugachse.

Zur Lösung dieser Aufgabe wird eine Fahrzeugachse mit den Merkmalen des Patentanspruchs 1 vorgeschlagen.

Bestandteile der Fahrzeugachse sind an beiden Achsenden auf Achsstummeln drehbar gelagerte Radköpfe, eine in einem Mittelabschnitt der Fahrzeugachse angeordnete elektrische Vorrichtung, die eine im Motor- und/oder Generatorbetrieb betreibbare elektrische Maschine aufweist, und eine durch den Achsstummel hindurchführende Drehverbindung, die den Radkopf mit dem Kraftaus- bzw. Eingang der elektrischen Vorrichtung verbindet. Weiterhin weist die Drehverbindung ein drehmomentbegrenzendes Glied auf, z. B. in der Bauart als Rutschkupplung.

Geschaffen wird so eine Fahrzeugachse, die auch verbessert ist im Hinblick auf solche im Fahrbetrieb bisweilen eintretenden Situationen, in denen, etwa aufgrund abrupt sich ändernder Fahrzustände, die Gefahr einer Überforderung zumindest einzelner Antriebskomponenten besteht. Diese Überforderung kann mechanischer Natur sein und/oder eine Überlastung oder eine drohende Fehlfunktion der elektrischen Komponenten der Fahrzeugachse.

Das drehmomentbegrenzende Glied ist mit der Aus- bzw. der Eingangswelle der elektrischen Vorrichtung gekoppelt und umfasst, in der Bauart als Rutschkupplung, zwei Kupplungspartner mit unter Federbelastung gegeneinander anliegenden Reibungsflächen. Übersteigt das Drehmomentmoment die Haftreibung an den Reibungsflächen, so löst sich die Kupplung und ein höheres Drehmoment ist nicht mehr übertragbar.

Eine bevorzugte Ausgestaltung sieht vor, dass die Drehverbindung außerdem ein drehrichtungsabhängig den Kraftfluss entweder sperrendes oder freigebendes Glied aufweist, wobei das drehmomentbegrenzende Glied und das drehrichtungsabhängig den Kraftfluss entweder sperrende oder freigebende Glied im Kraftfluss der Drehverbindung hintereinander geschaltet sind. Das drehrichtungsabhängig arbeitende Glied ist z. B. als ein Freilauf ausgebildet.

Die Funktionen der beiden Glieder können auch in einem einzigen Glied verwirklicht sein.

Bestandteile der Drehverbindung sind Drehwellenabschnitte, wobei ein erster Drehwellenabschnitt den Radkopf mit dem drehrichtungsabhängig arbeitenden Glied, und ein zweiter Drehwellenabschnitt das drehrichtungsabhängig arbeitende Glied mit dem drehmomentbegrenzenden Glied verbindet. Vorzugsweise beträgt die Länge des ersten Drehwellenabschnitts mindestens das 5fache der Länge des zweiten Drehwellenabschnitts.

Vorzugsweise ist das drehmomentbegrenzende Glied drehfest mit dem Kraftaus- bzw. Eingang der elektrischen Vorrichtung oder eines Getriebes der Vorrichtung gekoppelt.

Ferner wird vorgeschlagen, dass der Achsstummel über einen einstückig daran ausgebildeten Rohrabschnitt, welcher auch Bestandteil des Achsstummels sein kann, starr mit dem Mittelabschnitt verbunden ist. In diesem Fall kann sich das drehrichtungsabhängig arbeitende Glied zumindest überwiegend innerhalb des Rohrabschnitts befinden, da dort aufgrund der relativ großen Rohrquerschnitte ausreichend Platz für das drehrichtungsabhängig arbeitende Glied vorhanden ist.

Ferner wird vorgeschlagen, dass das als Freilauf ausgebildete, drehrichtungsabhängig arbeitende Glied berührungsfrei gegenüber dem Rohrabschnitt bzw. dessen Innenwandung ist.

Der zentral angeordnete Mittelabschnitt der Fahrzeugachse ist vorzugsweise als ein dreidimensional gestalteter Rahmen ausgebildet, welcher die elektrische Vorrichtung aufnimmt und insbesondere beide elektrischen Vorrichtungen, wobei jede der Vorrichtungen einem der Radköpfe zugeordnet ist.

Gemäß einer bevorzugten Ausgestaltung setzt sich der Rahmen aus mindestens zwei parallel zur Achsrichtung verlaufenden Streben und aus Stirnwänden zusammen. Die Streben und Stirnwände umgeben daher gemeinsam einen Raum, welcher ausreichend Platz für beide elektrischen Vorrichtungen bietet, und ggf. auch für deren Getriebe.

Von Vorteil ist, wenn die elektrischen Vorrichtungen nicht und auch nicht teilweise an den Streben befestigt sind, vielmehr die elektrischen Vorrichtungen jeweils gegen die betreffende
Stirnwand befestigt sind, welche Stirnwand die gleichgerichteten Enden der Streben miteinander verbindet.

Zur Verbindung der Rohrabschnitte mit dem Rahmen wird vorgeschlagen, dass der jeweilige Rohrabschnitt in einer zentral in der Stirnwand angeordneten Öffnung sitzt. In diesem Fall ist die elektrische Vorrichtung mittels mehrerer Schrauben gegen die Stirnwand befestigt, wobei die Schrauben durch Löcher in der Stirnwand hindurchführen, die zusammen einen Lochkreis um die Öffnung herum bilden.

Mit weiteren Ausgestaltungen wird vorgeschlagen, dass sich das drehmomentbegrenzende Glied zumindest überwiegend innerhalb der Öffnung befindet, und dass das drehmomentbegrenzende Glied berührungsfrei gegenüber der Wandung der Öffnung und gegenüber dem Rohrabschnitt ist.

Eine bevorzugte Ausgestaltung und weitere Einzelheiten ergeben sich aus der nachfolgenden Beschreibung eines auf der Zeichnung wiedergegebenen Ausführungsbeispiels. Es zeigen:

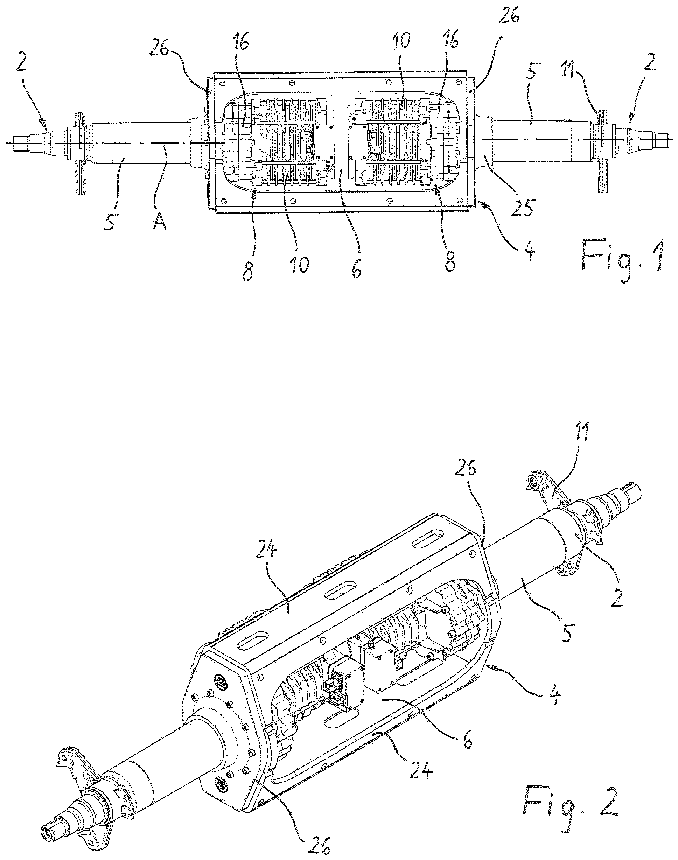

Fig. 1 : in einer Gesamtansicht eine mit elektrischen Komponenten versehene Fahrzeugachse und ohne die jeweils an den Achsenden angeordneten Radköpfe;
Fig. 2 : die Fahrzeugachse nach Fig. 1 in einer perspektivischen Seitenansicht;
Fig. 3 : in einem Längsschnitt entlang der Achsmitte nur den linken Teil der Fahrzeugachse einschließlich des Radkopfes, aber ohne die elektrischen Komponenten;
Fig. 4 : die Gegenstände nach Fig. 3 perspektivisch;

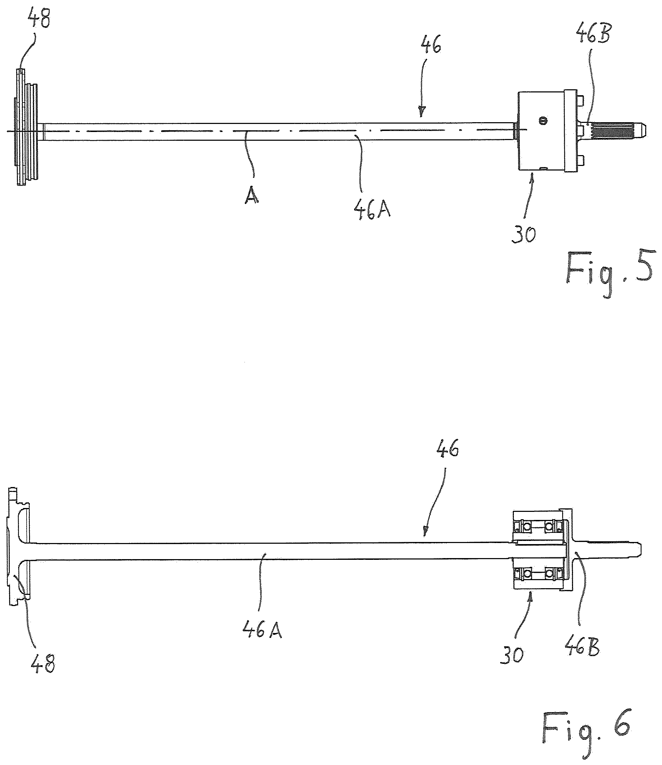

Fig. 5 : in einer Ansicht Elemente einer Drehverbindung und eines Freilaufs;
Fig. 6 : die Gegenstände nach Fig. 5 in einem Längsschnitt;

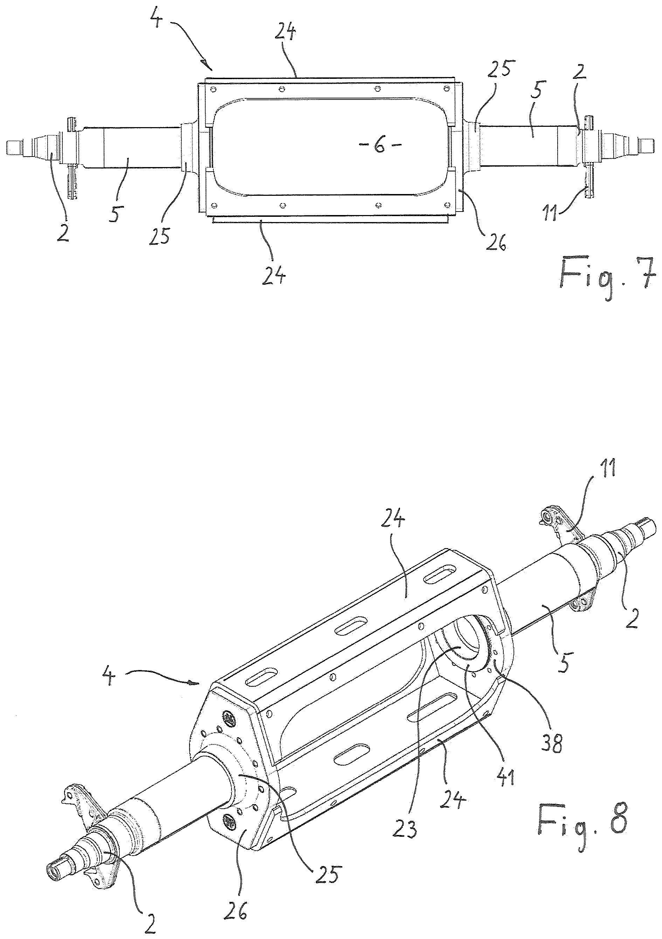

Fig. 7 : in einer Gesamtansicht die Fahrzeugachse ohne die Radköpfe, ohne die elektrischen Komponenten und ohne die Bestandteile des Drehantriebs;
Fig. 8 : die Gegenstände nach Fig. 7 perspektivisch.

Auf den Zeichnungen wiedergegeben ist eine sich quer zur Fahrtrichtung eines nicht dargestellten Fahrzeugs erstreckende Fahrzeugachse in der Bauart als Starrachse. Deren zentraler Bestandteil ist ein dreidimensionaler Rahmen 4, der mit seinen Rahmenelementen eine Aufnahmeöffnung 6 begrenzt bzw. umschließt, die einen Raum bildet. In der Aufnahmeöffnung 6 und damit in dem Raum befinden sich, links und rechts der Längsmitte der Fahrzeugachse, jeweils eine elektrische Vorrichtung 8, die jeweils eine elektrische Maschine 10 aufweist.

Die zwei elektrischen Maschinen 10 sind im Motor- und/oder im Generatorbetrieb betreibbar. Daher sind die elektrischen Maschinen 10 entweder das Fahrzeug antreibende Elektromotoren, oder ein Ladestrom für einen fahrzeugeigenen Akkumulator erzeugender Generator.

Beide elektrischen Vorrichtungen 8 weisen außerdem ein der jeweiligen elektrischen Maschine 10 nachgeschaltetes (im Fall eines Motors) oder vorgeschaltetes (im Fall eines Generators) Getriebe 16 auf.

Die elektrischen Vorrichtungen 8 sind zumindest überwiegend in dem durch die Aufnahmeöffnung 6 gebildeten Raum des dreidimensionalen Rahmens 4 aufgenommen, und sie sind im Inneren des Rahmens 4 an Bestandteilen des Rahmens 4 befestigt.

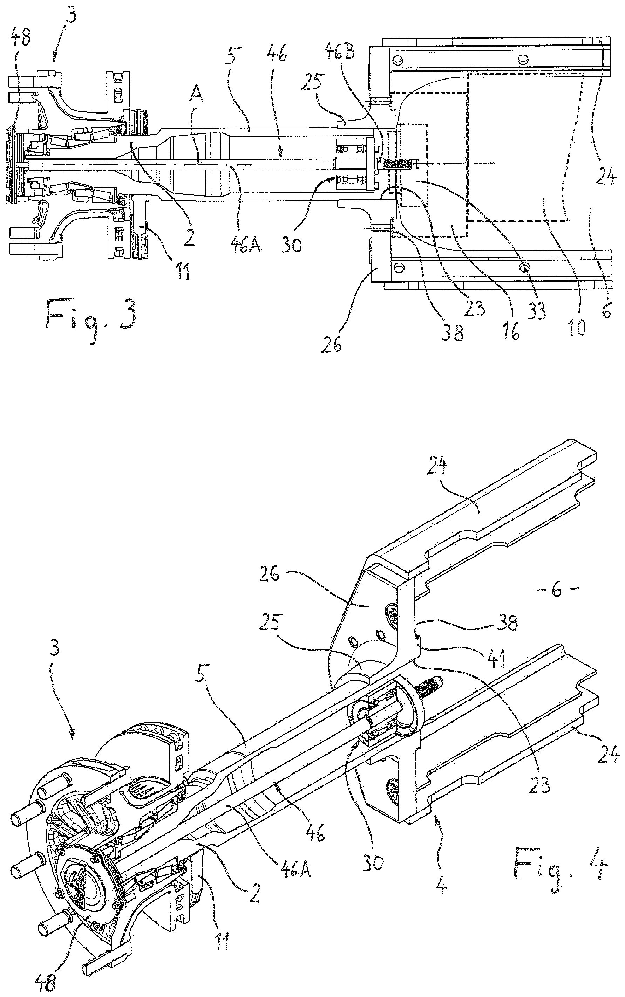

Gemäß Fig. 3 sind die Endbereiche der Fahrzeugachse als Achsstummel 2 ausgebildet. An jedem Achsstummel 2 ist jeweils ein auf einer Drehachse A rotierend gelagerter Radkopf 3 angeordnet. Der Radkopf 3 umfasst zumindest eine an dem Achsstummel 2 wälzgelagerte Radnabe, ein Fahrzeugrad und eine Bremsscheibe einer Fahrzeugscheibenbremse. Bestandteil der Fahrzeugbremse ist ein an dem Achsstummel 2 befestigter Bremsträger 11.

Der Radkopf 3 und damit das daran befestigte Fahrzeugrad kann mittels der elektrischen Maschine 10 angetrieben werden, falls die elektrische Maschine 10 ein elektrischer Antrieb ist. Ist die elektrische Maschine 10 hingegen ein Generator, so wird dieser durch die Drehbewegung des an dem Radkopf 3 befestigten Fahrzeugrades in Drehung versetzt, und generiert auf diese Weise Ladestrom für den bordeigenen Akkumulator des Fahrzeugs.

Jeder Achsstummel 2 geht nach fahrzeuginnen, vorzugsweise einstückig, in einen Rohrabschnitt 5 über. Mittels des Rohrabschnitts 5 ist der Achsstummel 2 starr in einer jeweiligen Stirnwand 26 befestigt, die ein Bestandteil des Rahmens 4 ist. Die Stirnwand 26 erstreckt sich im Wesentlichen quer zur Achsrichtung und weist daher eine dem Radkopf 3 zugewandte Außenseite und eine der zentralen Aufnahmeöffnung 6 zugewandte Innenseite auf.

Der Rohrabschnitt 5 des Achsstummels 2 sitzt mit seinem fahrzeuginneren Ende starr und drehfest in einer zentral in der Stirnwand 26 angeordneten Öffnung 23, die eine Durchgangsöffnung ist. Die Mantelfläche der Öffnung 23 befindet sich zum Teil in einer an der Außenseite der Stirnwand 26 angeformten und so die Öffnung 23 verlängernden Buchse 25.

Die elektrische Vorrichtung 8 ist mittels seines Getriebes 16 an einer der zentralen Aufnahmeöffnung 6 zugewandten Anschlagfläche 38 befestigt, die sich an der Innenseite der Stirnwand 26 befindet und ringförmig die Öffnung 23 umgibt. Dazu ist das Gehäuse des Getriebes 16 axial gegen die Anschlagfläche 38 abgestützt. Schrauben, die im Bereich der Anschlagfläche 38 durch Bohrungen in der Stirnwand 26 hindurchführen, übernehmen die drehmomentfeste Fixierung des Gehäuses des Getriebes 16 an der Anschlagfläche 38.

Die ringförmige Anschlagfläche 38 umgibt einen ebenfalls ringförmigen Zentrieransatz 41, der ebenfalls Bestandteil der Stirnwand 26 ist. Der Zentrieransatz 41 richtet die elektrische Vorrichtung 8 radial aus, zentriert diese also an der Stirnwand 26 in Bezug auf die Drehachse A.

Die jeweilige elektrische Vorrichtung 8 ist auch ausschließlich an der Stirnwand 26 befestigt. Es besteht keine Befestigung an anderen Bauteilen des Rahmens 4 und insbesondere keine Befestigung an Streben 24, welche gemeinsam mit den Stirnwänden 26 den starren, dreidimensional gestalteten Rahmen 4 bilden. Die Anzahl der parallel zur Achslinie der Achsstummel 2 und zugleich quer zu den Stirnwänden 26 verlaufenden Streben 24 beträgt beim Ausführungsbeispiel zwei, kann aber auch mehr betragen.

Eine Drehverbindung 46, die auf der Drehachse A durch den jeweiligen Achsstummel 2, dessen Rohrabschnitt 5 und die Buchse 25 der Stirnwand 26 hindurchführt, verbindet den Radkopf 3 mit dem Kraftausgang bzw. dem Krafteingang des Getriebes 16. Die Drehverbindung 46 umfasst, außer einer mehrteiligen Übertragungswelle, im Kraftfluss hintereinandergeschaltet ein drehrichtungsabhängig den Kraftfluss entweder sperrendes oder freigebendes Glied 30 in einer Bauart vorzugsweise als Freilauf, und ein drehmomentbegrenzendes Glied 33 in einer Bauart vorzugsweise als Rutschkupplung.

Das drehmomentbegrenzende Glied 33 ist getriebeseitig drehfest mit der Aus- bzw. der Eingangswelle des der elektrischen Maschine 10 zugeordneten Getriebes 16 gekoppelt. Das drehmomentbegrenzende Glied 33 umfasst, in der Bauart als Rutschkupplung, zwei Kupplungspartner mit unter Federbelastung gegeneinander anliegenden Reibungsflächen. Übersteigt das Drehmomentmoment die Haftreibung an den Reibungsflächen, so löst sich die Kupplung und ein höheres Drehmoment ist nicht mehr übertragbar.

Bestandteile der beiden Drehverbindungen 46 sind jeweils Drehwellenabschnitte 46A, 46B, wobei ein erster Drehwellenabschnitt 46A den Radkopf 3 mit dem drehrichtungsabhängig arbeitenden Glied 30 rotatorisch verbindet, und ein deutlich kürzerer zweiter Drehwellenabschnitt 46B das drehrichtungsabhängig arbeitende Glied 30 mit dem drehmomentbegrenzenden Glied 33 rotatorisch verbindet.

Der auf der Drehachse A und damit zugleich auf der Längsachse des Achsstummels 2 rotierende erste Drehwellenabschnitt 46A endet fahrzeugaußen in einer Platte 48, welche fest mit dem Radkopf 3 und hier vorzugsweise mit der Radnabe verbunden ist. Die Länge des ersten Drehwellenabschnitts 46A beträgt das Mehrfache und mindestens das 5fache der Länge des zweiten Drehwellenabschnitts 46B.

Gemäß Fig. 3 befindet sich das als Freilauf 30 ausgebildete, drehrichtungsabhängig arbeitende Glied zumindest teilweise und vorzugsweise zumindest überwiegend innerhalb des Rohrabschnitts 5, da darin aufgrund der relativ großen Rohrquerschnitte des Rohrabschnitts 5 ausreichend Platz für den Freilauf vorhanden ist.

Der in die eine Drehrichtung sperrende und in die andere Drehrichtung freigebende Freilauf 30 ist von so geringer radialer Baugröße, dass er berührungsfrei gegenüber dem Rohrabschnitt 5 ist, und ebenso berührungsfrei gegenüber der Öffnung 23 in der Buchse 25 und der Stirnwand 26.

Das drehmomentbegrenzende Glied 33 ist in der Weise angeordnet, dass es sich mit einem Teil seiner axialen Länge innerhalb der Öffnung 23 in der Buchse 25 und der Stirnwand 26 befindet, und mit einem anderen Teil seiner axialen Länge innerhalb der durch von dem Rahmen 4 umschlossenen Aufnahmeöffnung 6. Das drehmomentbegrenzende Glied 33 ist von so geringer radialer Baugröße, dass es berührungsfrei gegenüber dem Rohrabschnitt 5, berührungsfrei gegenüber der Öffnung 23 in der Buchse 25 und der Stirnwand 26, und berührungsfrei gegenüber dem Rahmen 4 ist.

### Bezugszeichenliste

- 2 :: Achsstummel
- 3 :: Radkopf
- 4 :: Rahmen
- 5 :: Rohrabschnitt
- 6 :: Aufnahmeöffnung
- 8 :: elektrische Vorrichtung
- 10 :: elektrische Maschine
- 11 :: Bremsträger
- 16 :: Getriebe
- 23 :: Öffnung
- 24 :: Strebe
- 25 :: Buchse
- 26 :: Stirnwand
- 30 :: drehrichtungsabhängig arbeitendes Glied; Freilauf
- 33 :: drehmomentbegrenzendes Glied; Rutschkupplung
- 38 :: Anschlagfläche
- 41 :: Zentrieransatz
- 46 :: Drehverbindung
- 46A :: Drehwellenabschnitt
- 46B :: Drehwellenabschnitt
- 48 :: Platte
- A :: Drehachse

## Patentansprüche

1. Fahrzeugachse,
mit an beiden Achsenden auf Achsstummeln (2), um eine Drehachse (A) drehbar gelagerten Radköpfen (3),
mit einer in einem Mittelabschnitt der Fahrzeugachse angeordneten elektrischen Vorrichtung (8), die eine im Motor- und/oder Generatorbetrieb betreibbare elektrische Maschine (10) und ein der elektrischen Maschine (10) nachgeschaltetes oder vorgeschaltetes Getriebe (16) aufweist,
wobei der Mittelabschnitt der Fahrzeugachse als ein dreidimensional gestalteter, die elektrische Vorrichtung (8) aufnehmender Rahmen (4) ausgebildet ist, der mit seinen Rahmenelementen eine Aufnahmeöffnung (6) umschließt,
wobei sich in der Aufnahmeöffnung (6) die elektrische Vorrichtung (8) befindet,
wobei der Rahmen (4) eine Stirnwand (26) aufweist, die sich im Wesentlichen quer zur Achsrichtung erstreckt und eine dem Radkopf (3) zugewandte Außenseite und eine der Aufnahmeöffnung (6) zugewandte Innenseite aufweist,
und mit einer durch den Achsstummel (2) hindurchführenden Drehverbindung (46), die den Radkopf (3) mit dem Kraftaus- bzw. Eingang der elektrischen Vorrichtung (8) verbindet,
wobei die Drehverbindung (46) ein drehmomentbegrenzendes Glied (33) aufweist,
wobei die elektrische Vorrichtung (8) mittels ihres Getriebes (16) an einer der Aufnahmeöffnung (6) zugewandten Anschlagfläche (38) befestigt ist,
wobei sich die Anschlagfläche (38) an der Innenseite der Stirnwand (26) befindet und ringförmig eine Öffnung (23) umgibt,
wobei das Gehäuse des Getriebes (16) axial gegen die Anschlagfläche (38) abgestützt ist,
wobei die ringförmige Anschlagfläche (38) einen ebenfalls ringförmigen Zentrieransatz (41), der ebenfalls Bestandteil der Stirnwand (26) ist, umgibt, wobei der Zentrieransatz (41) die elektrische Vorrichtung (8) radial ausrichtet und die elektrische Vorrichtung (8) an der Stirnwand (26) in Bezug auf die Drehachse (A) zentriert.

2. Fahrzeugachse nach Anspruch 1, **dadurch gekennzeichnet, dass** die Drehverbindung (46) außerdem ein drehrichtungsabhängig den Kraftfluss entweder sperrendes oder freigebendes Glied (30) aufweist, wobei das drehmomentbegrenzende Glied (33) und das drehrichtungsabhängig den Kraftfluss entweder sperrende oder freigebende Glied (30) im Kraftfluss der Drehverbindung (46) hintereinander geschaltet sind.

3. Fahrzeugachse nach Anspruch 2, **dadurch gekennzeichnet, dass** Bestandteile der Drehverbindung (46) Drehwellenabschnitte (46A, 46B) sind, wobei ein erster Drehwellenabschnitt (46A) den Radkopf (3) mit dem drehrichtungsabhängig arbeitenden Glied (30), und ein zweiter Drehwellenabschnitt (46B) das drehrichtungsabhängig arbeitende Glied (30) mit dem drehmomentbegrenzenden Glied (33) verbindet.

4. Fahrzeugachse nach Anspruch 3, **dadurch gekennzeichnet, dass** die Länge des ersten Drehwellenabschnitts (46A) mindestens das 5-fache der Länge des zweiten Drehwellenabschnitts (46B) beträgt.

5. Fahrzeugachse nach einem der vorangehenden Ansprüche, **dadurch gekennzeichnet, dass** das drehmomentbegrenzende Glied (33) drehfest mit dem Kraftaus- bzw. Eingang der elektrischen Vorrichtung (8) gekoppelt ist.

6. Fahrzeugachse nach einem der Ansprüche 2 - 5, **gekennzeichnet durch** einen Freilauf als drehrichtungsabhängig arbeitendes Glied (30).

7. Fahrzeugachse nach einem der vorangehenden Ansprüche, **gekennzeichnet durch** eine Rutschkupplung als drehmomentbegrenzendes Glied (33).

8. Fahrzeugachse nach einem der vorangehenden Ansprüche, **dadurch gekennzeichnet, dass** der Achsstummel (2) über einen einstückig daran ausgebildeten Rohrabschnitt (5) starr mit dem Mittelabschnitt verbunden ist.

9. Fahrzeugachse nach Anspruch 8, **dadurch gekennzeichnet, dass** sich das drehrichtungsabhängig arbeitende Glied (30) zumindest überwiegend innerhalb des Rohrabschnitts (5) befindet.

10. Fahrzeugachse nach Anspruch 9, **dadurch gekennzeichnet, dass** das drehrichtungsabhängig arbeitende Glied (30) berührungsfrei gegenüber dem Rohrabschnitt (5) ist.

11. Fahrzeugachse nach einem der vorhergehenden Ansprüche, **dadurch gekennzeichnet, dass** der Rahmen (4) zwei elektrische Vorrichtungen (8) aufnimmt, wobei jede Vorrichtung (8) einem der Radköpfe (3) zugeordnet ist.

12. Fahrzeugachse nach einem der vorhergehenden Ansprüche, **dadurch gekennzeichnet, dass** sich der Rahmen (4) aus mindestens zwei parallel zur Achsrichtung verlaufenden Streben (24) und den zwei Stirnwänden (26) zusammensetzt.

13. Fahrzeugachse nach Anspruch 12, **dadurch gekennzeichnet, dass** die elektrische Vorrichtung (8) gegen die Stirnwand (26) befestigt ist, welche die gleichgerichteten Enden der Streben (24) miteinander verbindet.

14. Fahrzeugachse nach Anspruch 12 oder 13, **dadurch gekennzeichnet, dass** der Rohrabschnitt (5) in der zentral in der Stirnwand (26) angeordneten Öffnung (23) sitzt.

15. Fahrzeugachse nach Anspruch 14, **dadurch gekennzeichnet, dass** die elektrische Vorrichtung (8) mittels mehrerer Schrauben gegen die Stirnwand (26) befestigt ist, wobei die Schrauben durch Löcher in der Stirnwand (26) hindurchführen, die zusammen einen Lochkreis um die Öffnung (23) herum bilden.

16. Fahrzeugachse nach Anspruch 14 oder 15, **dadurch gekennzeichnet, dass** sich das drehmomentbegrenzende Glied (33) zumindest teilweise innerhalb der Öffnung (23) befindet.

17. Fahrzeugachse nach einem der Ansprüche 14 bis 16, **dadurch gekennzeichnet, dass** das drehmomentbegrenzende Glied (33) berührungsfrei gegenüber der Wandung der Öffnung (23) und gegenüber dem Rohrabschnitt (6) ist.

## Claims

1. Vehicle axle,
comprising wheel heads (3) mounted on axle stubs (2) at both axle ends and rotatable about a rotation axis (A),
comprising an electrical device (8) arranged in a central portion of the vehicle axle, which has an electrical machine (10) operable in motor and/or generator mode and a transmission (16) connected downstream or upstream of the electrical machine (10),
wherein the central portion of the vehicle axle is designed as a three-dimensional frame (4) receiving the electrical device (8) and enclosing a receiving opening (6) with its frame elements,
wherein the electrical device (8) is located in the receiving opening (6),
wherein the frame (4) has an end wall (26) which extends substantially transversely to the axial direction and has an outer side facing the wheel head (3) and an inner side facing the receiving opening (6),
and comprising a rotary joint (46) passing through the axle stub (2) and connecting the wheel head (3) to the power output or input of the electrical device (8),
wherein the rotary joint (46) has a torque-limiting member (33),
wherein the electrical device (8) is fastened by means of its transmission (16) to a stop surface (38) facing the receiving opening (6),
wherein the stop surface (38) is located on the inside of the end wall (26) and surrounds an opening (23) in a ring,
wherein the housing of the transmission (16) is axially supported against the stop surface (38),
wherein the annular stop surface (38) surrounds a likewise annular centering projection (41), which is also a component of the end wall (26), wherein the centering projection (41) aligns the electrical device (8) radially and centers the electrical device (8) on the end wall (26) with respect to the rotation axis (A).

2. Vehicle axle according to claim 1, **characterized in that** the rotary joint (46) further comprises a member (30) which either blocks or releases the force flow depending on the direction of rotation, wherein the torque-limiting member (33) and the member (30) which either blocks or releases the force flow depending on the direction of rotation are connected in series in the force flow of the rotary joint (46).

3. Vehicle axle according to claim 2, **characterized in that** components of the rotary joint (46) are rotary shaft portions (46A, 46B), wherein a first rotary shaft portion (46A) connects the wheel head (3) to the member (30) operating in a rotation direction-dependent manner, and a second rotary shaft portion (46B) connects the member (30) operating in a rotation direction-dependent manner to the torque-limiting member (33).

4. Vehicle axle according to claim 3, **characterized in that** the length of the first rotary shaft portion (46A) is at least 5 times the length of the second rotary shaft portion (46B).

5. Vehicle axle according to any of the preceding claims, **characterized in that** the torque-limiting member (33) is rotationally coupled to the power output or input of the electrical device (8).

6. Vehicle axle according to any of claims 2 - 5, **characterized by** a freewheel as a member (30) operating in a rotation direction-dependent manner.

7. Vehicle axle according to any of the preceding claims, **characterized by** a slip clutch as a torque-limiting member (33).

8. Vehicle axle according to any of the preceding claims, **characterized in that** the axle stub (2) is rigidly connected to the central portion via a pipe portion (5) formed integrally thereon.

9. Vehicle axle according to claim 8, **characterized in that** the member (30) operating in a rotation direction-dependent manner is located at least predominantly within the pipe portion (5).

10. Vehicle axle according to claim 9, **characterized in that** the member (30) operating in a rotation direction-dependent manner is contact-free with respect to the pipe portion (5).

11. Vehicle axle according to any of the preceding claims, **characterized in that** the frame (4) accommodates two electrical devices (8), each device (8) being associated with one of the wheel heads (3).

12. Vehicle axle according to any of the preceding claims, **characterized in that** the frame (4) is composed of at least two struts (24), which run parallel to the axial direction, and the two end walls (26).

13. Vehicle axle according to claim 12, **characterized in that** the electrical device (8) is fixed against the end wall (26) which connects the aligned ends of the struts (24) to each other.

14. Vehicle axle according to claim 12 or 13, **characterized in that** the pipe portion (5) sits in the opening (23) arranged centrally in the end wall (26).

15. Vehicle axle according to claim 14, **characterized in that** the electrical device (8) is fastened to the end wall (26) by means of a plurality of screws, the screws passing through holes in the end wall (26) which together form a circle of holes around the opening (23).

16. Vehicle axle according to claim 14 or 15, **characterized in that** the torque-limiting member (33) is located at least partially within the opening (23).

17. Vehicle axle according to any of claims 14 to 16, **characterized in that** the torque-limiting member (33) is contact-free with respect to the wall of the opening (23) and with respect to the pipe portion (6).

## Revendications

1. Essieu de véhicule,
avec, aux deux extrémités d'essieu, des têtes de roue (3) montées sur des fusées d'essieu (2) de manière à pouvoir tourner autour d'un axe de rotation (A),
avec un dispositif électrique (8) disposé dans une section centrale de l'essieu de véhicule, qui présente une machine électrique (10) pouvant fonctionner en mode moteur et/ou générateur et une transmission (16) située en aval ou en amont de la machine électrique (10),
dans lequel la section centrale de l'essieu de véhicule est réalisée sous la forme d'un cadre (4) de forme tridimensionnelle, recevant le dispositif électrique (8), qui entoure avec ses éléments de cadre une ouverture de réception (6),
dans lequel le dispositif électrique (8) se trouve dans l'ouverture de réception (6),
dans lequel le cadre (4) présente une paroi frontale (26) qui s'étend sensiblement transversalement à la direction d'essieu et présente un côté extérieur tourné vers la tête de roue (3) et un côté intérieur tourné vers l'ouverture de réception (6),
et avec une liaison rotative (46) traversant la fusée d'essieu (2), qui relie la tête de roue à la sortie ou à l'entrée de force du dispositif électrique (8),
dans lequel la liaison rotative (46) présente un élément de limitation de couple (33),
dans lequel le dispositif électrique (8) est fixé au moyen de sa transmission (16) sur une surface de butée (38) tournée vers l'ouverture de réception (6),
dans lequel la surface de butée (38) se trouve sur le côté intérieur de la paroi frontale (26) et entoure de manière annulaire une ouverture (23),
dans lequel le boîtier de la transmission (16) est supporté axialement contre la surface de butée (38),
dans lequel la surface de butée (38) annulaire entoure une saillie de centrage (41) également annulaire, qui fait également partie de la paroi frontale (26), dans lequel la saillie de centrage (41) oriente le dispositif électrique (8) radialement et centre le dispositif électrique (8) sur la paroi frontale (26) par rapport à l'axe de rotation (A).

2. Essieu de véhicule selon la revendication 1, **caractérisé en ce que** la liaison rotative (46) présente en outre un élément (30) bloquant ou libérant le flux de force en fonction du sens de rotation, dans lequel l'élément de limitation de couple (33) et l'élément (30) bloquant ou libérant le flux de force en fonction du sens de rotation sont connectés l'un derrière l'autre dans le flux de force de la liaison rotative (46).

3. Essieu de véhicule selon la revendication 2, **caractérisé en ce que** les composants de la liaison rotative (46) sont des sections d'arbre de rotation (46A, 46B), dans lequel une première section d'arbre de rotation (46A) relie la tête de roue (3) à l'élément (30) fonctionnant en fonction du sens de rotation, et une deuxième section d'arbre de rotation (46B) relie l'élément (30) fonctionnant en fonction du sens de rotation à l'élément de limitation de couple (33).

4. Essieu de véhicule selon la revendication 3, **caractérisé en ce que** la longueur de la première section d'arbre de rotation (46A) est au moins égale à 5 fois la longueur de la deuxième section d'arbre de rotation (46B).

5. Essieu de véhicule selon l'une quelconque des revendications précédentes, **caractérisé en ce que** l'élément de limitation de couple (33) est couplé de manière solidaire en rotation à la sortie ou à l'entrée de force du dispositif électrique (8).

6. Essieu de véhicule selon l'une quelconque des revendications 2 à 5, **caractérisé par** une roue libre en tant qu'élément (30) fonctionnant en fonction du sens de rotation.

7. Essieu de véhicule selon l'une quelconque des revendications précédentes, **caractérisé par** un accouplement à friction en tant qu'élément de limitation de couple (33).

8. Essieu de véhicule selon l'une quelconque des revendications précédentes, **caractérisé en ce que** la fusée d'essieu (2) est reliée de manière rigide à la section centrale par l'intermédiaire d'une section de tube (5) réalisée d'un seul tenant sur elle.

9. Essieu de véhicule selon la revendication 8, **caractérisé en ce que** l'élément (30) fonctionnant en fonction du sens de rotation se trouve au moins principalement à l'intérieur de la section de tube (5).

10. Essieu de véhicule selon la revendication 9, **caractérisé en ce que** l'élément (30) fonctionnant en fonction du sens de rotation est sans contact par rapport à la section de tube (5).

11. Essieu de véhicule selon l'une quelconque des revendications précédentes, **caractérisé en ce que** le cadre (4) reçoit deux dispositifs électriques (8), dans lequel chaque dispositif (8) est associé à l'une des têtes de roue (3).

12. Essieu de véhicule selon l'une quelconque des revendications précédentes, **caractérisé en ce que** le cadre (4) se compose d'au moins deux entretoises (24) s'étendant parallèlement à la direction de l'essieu et des deux parois frontales (26).

13. Essieu de véhicule selon la revendication 12, **caractérisé en ce que** le dispositif électrique (8) est fixé contre la paroi frontale (26), laquelle relie les extrémités de même sens des entretoises (24).

14. Essieu de véhicule selon la revendication 12 ou 13, **caractérisé en ce que** la section de tube (5) repose dans l'ouverture (23) disposée au centre dans la paroi frontale (26).

15. Essieu de véhicule selon la revendication 14, **caractérisé en ce que** le dispositif électrique (8) est fixé contre la paroi frontale (26) au moyen de plusieurs vis, dans lequel les vis traversent des perforations dans la paroi frontale (26), qui forment ensemble un cercle de perforations autour de l'ouverture (23).

16. Essieu de véhicule selon la revendication 14 ou 15, **caractérisé en ce que** l'élément de limitation de couple (33) se trouve au moins partiellement à l'intérieur de l'ouverture (23).

17. Essieu de véhicule selon l'une quelconque des revendications 14 à 16, **caractérisé en ce que** l'élément de limitation de couple (33) est sans contact par rapport à la paroi de l'ouverture (23) et par rapport à la section de tube (6).
